(19) Europäisches Patentamt

European Patent Office

Office européen des brevets

(11) **EP 0 999 235 A1**

(12) **EUROPEAN PATENT APPLICATION**
published in accordance with Art. 158(3) EPC

(43) Date of publication:
**10.05.2000 Bulletin 2000/19**

(51) Int. Cl.[7]: **C08L 77/02**, C08L 77/06,
C08L 25/18

(21) Application number: **97950440.4**

(22) Date of filing: **26.12.1997**

(86) International application number:
**PCT/JP97/04910**

(87) International publication number:
**WO 98/29512 (09.07.1998 Gazette 1998/27)**

(84) Designated Contracting States:
**DE FR GB**

(30) Priority: **27.12.1996 JP 34979896**

(71) Applicant: **UNITIKA LTD.**
**Amagasaki-shi, Hyogo 660-0824 (JP)**

(72) Inventors:
• **WAKAMURA, Kazuyuki,**
**Unitika Ltd**
**Uji-shi, Kyoto 611 (JP)**

• **OSAWA, Tadashi,**
**Unitika Ltd**
**Uji-shi, Kyoto 611 (JP)**

(74) Representative: **HOFFMANN - EITLE**
**Patent- und Rechtsanwälte**
**Arabellastrasse 4**
**81925 München (DE)**

(54) **FLAME-RETARDANT POLYAMIDE RESIN COMPOSITION**

(57)     A flame-retardant polyamide resin composition which has a high level of flame retardancy and excellent fluidity, does not emit a gas so much during molding and is suited for electronic parts such as connector, switch, and the like. This resin composition comprises 40 to 89 parts by weight of a polyamide resin (A) composed of 5 to 95 wt.% of nylon 66 and 95 to 5 wt.% of nylon 6, 10 to 50 parts by weight of brominated polystyrene (B) and 1 to 20 parts by weight of flame retarding assistant (C), based on 100 parts by weight of the whole composition.

EP 0 999 235 A1

Printed by Xerox (UK) Business Services
2.16.7 (HRS)/3.6

## Description

### Technical Field

The present invention relates to a flame retardant polyamide resin composition having excellent flame retardancy and fluidity, emits only a small amount of gas during molding and is suited for electronic parts such as connector, switch, and the like.

### Background Art

Since polyamide resins are excellent in mechanical properties, heat resistance and electrical properties, they are used widely for electric • electronic parts, mechanical parts, automobile parts and the like.

Particularly in the application to electronic parts, reflecting a recent increasing tendency to size reduction and thickness decrease of parts, molding materials are required to have higher flame retardancy and superior fluidity. In addition, with a view to overcoming the problem caused by the addition of a flame retardant, that is, the corrosion of a mold, a molding material which generates only a small amount of gas during molding is demanded.

For the flame retardation of a polyamide resin, many proposals have been made. For example, as a flame retardant having relatively high heat resistance, not only brominated polystyrene but also brominated phenoxy resins, brominated polyphenylene ether, chlorine-substituted polycyclic compounds, phosphorous-based compounds and the like are used generally.

Among the above-exemplified flame retardants, brominated phenoxy resins have low heat resistance and emit a large amount of decomposition gas during molding. Brominated polyphenylene ether, which is used for black molded products owing to inferior color tone, emits a large amount of decomposition gas during molding. Chlorine-substituted polycyclic compounds have insufficient heat resistance and in addition, chlorine contained in it tends to be disliked in the application to electronic parts. Phosphorous-based compounds are inferior in color tone and happens to burn during injection molding. Flame retardants other than brominated polystyrene are therefore not suited for electronic parts such as connector, switch, and the like.

In this field, flame-retarded nylon 66 has conventionally been used mainly because of excellent flame retardancy, heat resistance and fast cycling properties. In an unexamined published Japanese patent application No. 51-47044, for example, a nylon resin composition using brominated polystyrene as a flame retardant is disclosed. Although excellent heat resistance and fast cycling properties were obtained, it is not always satisfactory from the viewpoints of fluidity, gas emission during molding and tenacity.

For overcoming the above-described problems, those obtained by incorporating various additives in a flame retardant polyamide resin composition composed of nylon 66 and brominated polystyrene have been proposed. For example, disclosed are a composition to which a phosphite compound has been added (an unexamined published Japanese patent application No. 6-184431), and a composition to which a copper compound and an alkali halide have been added (an unexamined published Japanese patent application No. 6-19256, an unexamined published Japanese patent application No. 4-202357), each in order to control the thermal decomposition or gas generation during molding. In addition, disclosed are a composition to which an acid-modified block copolymer of an aromatic vinyl compound and an olefinic compound has been added (Japanese Patent No. 2604616), a composition to which a specific nonionic surfactant has been added (an unexamined published Japanese patent application No. 58-84854) and a composition to which a modified polypropylene has been added (an unexamined published Japanese patent application No. 6-322265), each in order to improve tenacity.

However, the above-described resin compositions are not satisfactory in the fluidity and gas emission during molding for the parts such as a connector which are required to have thin thickness.

The present invention is to overcome the above-described problems in view of the request in the field of electronic parts such as connector, switch, and the like; and to provide a flame retardant polyamide resin composition having a high level of flame retardancy and excellent fluidity, does not emit a large amount of gas during molding and is suited for electronic parts.

### Disclosure of the Invention

With a view to overcoming the above-described problems, the present inventors have carried out extensive studies and arrived the present invention.

Thus, the gist of the present invention resides in a flame retardant polyamide resin composition, which comprises (A) 40 to 89 parts by weight of a polyamide resin composed of 5 to 95 wt.% of nylon 66 and 95 to 5 wt.% of nylon 6; (B) 10 to 50 parts by weight of brominated polystyrene and (C) 1 to 20 parts by weight of a flame retarding assistant, based on 100 parts by weight of the whole resin composition.

Hereinafter, the present invention will be explained in detailed.

The polyamide resin (A) in the present invention is required to be composed of 5 to 95 wt.% of nylon 66 and 95 to 5 wt.% of nylon 6. These ranges are optionally selected depending on the heat resistance, tenacity, fluidity or the like requested, but more preferably nylon 66 falls within a range of 40 to 90 wt.% and nylon 6 falls within a range of 60 to 10 wt.%.

As the above-described nylon 6, that having an amino terminal blocked with a monobasic acid or dibasic acid is preferred, because the emission amount of gas during molding can be reduced. Particularly preferred is that having a terminal amino group concentration, as measured by the method described later, of 50 mmol/kg or less, preferably 40 mmol/kg or less and having an amino terminal blocked with a monobasic acid.

Examples of the monobasic acid used as an amino terminal blocking agent of nylon 6 include acetic acid, benzoic acid, formic acid, propionic acid, butyric acid, isobutyric acid, valeric acid, hexanoic acid, heptanoic acid, octanoic acid, nonanoic acid, decanoic acid, lauric acid, myristic acid, palmitic acid, stearic acid, acrylic acid, methacrylic acid, crotonic acid, isocrotonic acid, phenylacetic acid, hydrocinnamic acid, cinnamic acid, toluic acid, chlorobenzoic acid, nitrobenzoic acid, dinitrobenzoic acid, trinitrobenzoic acid, anthranilic acid, hydroxybenzoic acid and methoxybenzoic acid, benzoic acid and acetic acid are particularly preferred.

Examples of the dibasic acid used as an amino terminal blocking agent of nylon 6 include adipic acid, sebacic acid, succinic acid, suberic acid, azelaic acid, dodecanedicarboxylic acid, phthalic acid, isophthalic acid, terephthalic acid, naphthalenedicarboxylic acid, 2-chloroterephthalic acid, 2-methylterephthalic acid, 5-sulfoisophthalic acid sodium salt, hexahydroterephthalic acid, hexahydroisophthalic acid and diglycolic acid, adipic acid is particularly preferred.

The nylon 66 or nylon 6 preferably has a relative viscosity falling within a range of 1.5 to 4.0 as measured under the conditions of a temperature of 25°C and concentration of 1 g/dl with 96 wt.% concentrated sulfuric acid as a solvent. When the relative viscosity is less than 1.5, the molded product has reduced mechanical strength. When the relative viscosity exceeds 4.0, on the other hand, the moldability of the resin composition decreases rapidly, and this is not preferable.

The amount of the polyamide resin is required to fall within a range of from 40 to 89 parts by weight. When the amount is less than 40 parts by weight, the resin composition having excellent mechanical properties and heat resistance cannot be obtained. When the amount exceeds 89 parts by weight, on the other hand, the resin composition having excellent flame retardancy is not available, and this is not preferable.

The brominated polystyrene (B) in the present invention is employed to impart a high level of flame retardancy (UL94V-O) and heat resistance.

Examples of the brominated polystyrene usable here include polystyrene having bromine added thereto, that obtained by the polymerization of a styrene monomer having bromine added thereto and mixture thereof. Among them, PDBS of Great Lakes Chemical Corp. obtained by the polymerization of a styrene monomer having bromine added thereto and Pyrocheck 68PB of Ferro Corporation, that is, polystyrene having bromine added thereto are preferred for its color tone, fluidity and gas emission in a small amount during molding.

If a high level of flame retardancy is available, the smaller the amount of the brominated polystyrene, the better from the viewpoints of mechanical properties and the amount of the gas emitted during molding. In general, it is required to fall within a range of 10 to 50 parts by weight. When the amount is less than 10 parts by weight, high-level of flame retardancy cannot be attained. Amounts exceeding 50 parts by weight, on the other hand, increase gas emission during molding, and this is not preferable.

The flame retarding assistant (C) in the present invention serves to increase flame-retarding effects, by exhibiting interaction with a flame retardant. As the assistant, at least one selected from antimony trioxide, antimony tetraoxide, antimony pentaoxide, sodium antimonate, tin(IV) oxide, iron(III) oxide, zinc oxide and zinc borate is employed, and antimony trioxide is particularly preferred.

The amount of the flame retarding assistant is required to fall within a range of from 1 to 20 parts by weight. When the amount is less than 1 part by weight, the assistant is poor in flame retarding assisting effect. Amounts exceeding 20 parts by weight, on the other hand, lower mechanical strength.

In the present invention, fluidity during molding can be improved more by incorporating a lubricant (D) in a resin composition composed of the above-described polyamide resin (A), brominated polystyrene (B) and flame retarding assistant (C).

As the lubricant (D), aliphatic bisamides and metal salts of a higher fatty acid are preferred.

Examples of the aliphatic bisamide include methylene bisstearylamide, methylene bislaurylamide, ethylene bisstearylamide, ethylene bislaurylamide, ethylene bisoleylamide and ethylene bisbehenylamide, and ethylene bisstearylamide is particularly preferred.

Examples of the metal salt of a higher fatty acid include metal salts of stearic acid, palmitic acid, lauric acid, myristic acid or the like. Particularly preferred are metal salts of stearic acid. Specific examples thereof include magnesium stearate, calcium stearate, barium stearate, aluminum stearate and zinc stearate.

It is preferred that the amount of the lubricant (D) falls within a range not greater than 5 parts by weight, based on 100 parts by weight of the resin composition ( (A)+(B)+(C) ). When the amount exceeds 5 parts by weight, the mechanical properties and flame retardancy tend to decrease.

In the present invention, an elastomer (E) is preferably added to a resin composition composed of the above-described polyamide resin (A), brominated polystyrene (B) and flame retarding assistant (C) for the purpose of improving the tenacity. The addition of this component (E) brings about a further improvement in the tenacity of a molded or formed product.

Specific examples of the elastomer (E) in the present invention include polyolefins each composed of at least one of ethylene, propylene and butene, these polyolefins modified with an unsaturated carboxylic acid or derivative thereof, XYX block copolymers or XY block copolymers each composed of an aromatic vinyl compound polymer block X and an olefinic compound polymer block Y, these copolymers modified with an unsaturated carboxylic acid or derivative thereof; and mixtures thereof.

Upon modification of the polyolefin, XYX block copolymer or XY block copolymer with an unsaturated carboxylic acid or derivative thereof, either of random copolymerization or graft polymerization may be used.

Specific examples of the aromatic vinyl compound polymer block X include homopolymers or copolymers of styrene, α-methylstyrene, vinylxylene, ethylvinylxylene or vinylnaphthalene.

Examples of the olefinic compound polymer block Y include polymers of a conjugated diene compound such as butadiene, isoprene, 1,3-pentadiene or 2,3-dimethylbutadiene and said polymers which have been partially or wholly hydrogenated at the unsaturated site. Specific examples include a butadiene polymer, isoprene polymer, 1,3-pentadiene polymer, 2,3-dimethylbutadiene polymer, ethylene-butylene polymer and ethylene-propylene polymer and mixtures thereof.

Specific examples of the above-described unsaturated carboxylic acid or derivative thereof include unsaturated mono- or di-carboxylic acids such as acrylic acid, methacrylic acid, maleic acid and fumaric acid, and amides, esters, metal salt compounds and acid anhydrides thereof. They may be used either singly or in combination.

Examples of the elastomer include maleic anhydride-modified ethylene-propylene copolymer, maleic anhydride-modified ethylene-butene copolymer, styrene-isoprene block copolymer, styrene-butadiene block copolymer, styrene-isoprene-styrene block copolymer, styrene-butadiene-styrene block copolymer, styrene-ethylene/butylene-styrene block copolymer, styrene-ethylene/propylene-styrene block copolymer, maleic anhydride-modified styrene-isoprene block copolymer, maleic anhydride-modified styrene-butadiene block copolymer, maleic anhydride-modified styrene-isoprene-styrene block copolymer, maleic anhydride-modified styrene-butadiene-styrene block copolymer, maleic anhydride-modified styrene-ethylene/butylene-styrene block copolymer and maleic anhydride-modified styrene-ethylene/propylene-styrene block copolymer.

The elastomer is preferably added in an amount of 10 parts by weight or less based on 100 parts by weight of the resin composition ( (A)+(B)+(C) ). When the amount exceeds 10 parts by weight, mechanical properties (particularly, rigidity) tend to decrease.

In the present invention, it is preferred to incorporate a fibrous reinforcing material (F) further in the resin composition composed of the above-described polyamide resin (A), brominated polystyrene (B) and flame retarding assistant (C).

Examples of the fibrous reinforcing material include glass fibers, carbon fibers, aramid fibers, metal fibers, whisker made of potassium titanate, whisker made of aluminum borate and wollastonite whisker, and glass fibers are particularly preferred for its balance between performance and cost.

The fibrous reinforcing material is preferably added in an amount ranging from 100 parts by weight or less based on 100 parts by weight of the resin composition ( (A)+(B)+(C) ). Amounts exceeding 100 parts by weight lowers the fluidity during molding.

A description will next be made of the preparation process of the resin composition of the present invention.

In the present invention, there is no limitation in the method of incorporating, in the polyamide resin (A), brominated polystyrene (B) and flame retarding assistance (C) and, if necessary, lubricant (D), elastomer (E) and fibrous reinforcing material (F) as long as each of the components (A) to (F) has been dispersed homogeneously.

Specifically, the resin composition of the present invention may be obtained by adding the brominated polystyrene (B) and flame retarding assistant (C) to the pellets of the polyamide resin (A), uniformly blending the resulting mixture in a tumbler or Henschel mixer, and when needed adding the lubricant (D), elastomer (E) and fibrous reinforcing material (F), pelletizing the resulting mixture in an extruder and then molding the resulting pellets.

Upon pelletization in an extruder, generally employable method is a method of feeding main raw materials from a first supply port collectively, or if a fibrous reinforcing material is added, a method of feeding the main raw materials from a first supply port and the fibrous reinforcing material from a second supply port. It is also possible to employ another method which is designed to decrease the heat load on the polyamide resin or flame retardant by feeding main raw materials from the first supply port and a portion of the polyamide resin or the flame retardant from the second supply port, thereby decreasing the amount of the gas generated during molding the resin composition. When the fibrous reinforcing material such as glass fiber is incorporated, the latter method is particularly effective because processing temperature rises owing to the heat generated by shearing.

As the molding method of the flame retardant polyamide resin composition of the present invention, injection molding is generally employed, but is not limited thereto.

The flame retardant polyamide resin composition of the present invention can be used in combination with a heat resistance improver, weather resistance improver, antioxidant, crystal nucleating agent, impact resistance improver, dispersing agent, pigment, dye or the like within an extent not largely impairing the properties of the composition.

**Best Modes for Carrying Out the Invention**

The present invention will next be described more specifically by Examples.

Incidentally, raw materials employed in Examples and Comparative Examples, method of preparing a test piece and measuring method of physical properties are as follows:

(Raw materials)

(A) Polyamide resin

Nylon 66:

Zytel 101 (produced by E.I. Du Pont de Nemours & Co., relative viscosity: 2.7)
Zytel FE3218 (produced by E.I. Du Pont de Nemours & Co., relative viscosity: 2.6)

Nylon 6:

A1025 (produced by Unitika, Ltd., relative viscosity: 2.3, terminal amino concentration: 71 mmol/kg)
A1022S (produced by Unitika, Ltd., relative viscosity 2.2, amino terminal blocked with acetic acid, terminal amino concentration: 34 mmol/kg)
A1022S-B (produced by Unitika, Ltd., relative viscosity: 2.3, amino terminal blocked with benzoic acid, terminal amino concentration: 38 mmol/kg)
A1030-C (trial product, relative viscosity: 2.5, amino terminal blocked with adipic acid, terminal amino concentration: 28 mmol/kg)

(B) Brominated polystyrene

Pyrocheck 68PB (produced by Ferro Corporation)
PDBS (produced by Great Lakes Chemical Corp.)

(B') Other flame retardant: brominated phenoxy resin

F2400 (produced by Deadsea Bromine Group)

(C) Flame retarding assistant: antimony trioxide

PATOX-M (NIHON SEIKO Co., Ltd.)

(D) Lubricant

Ethylene bisstearylamide ("Slipacks E", produced by Nippon Kasei Chemical Co., Ltd.)
Zinc stearate (produced by Sakai Chemical Industry Co., Ltd.)
Calcium stearate (produced by Sakai Chemical Industry Co., Ltd.)
Montan wax ("Hoechst Wax E", produced by Hoechst A.G.)
Ethylene acrylic acid copolymer ("AC540A", produced by AC Polymer Inc.)

(E) Elastomer

Maleic anhydride-modified ethylene-propylene copolymer ("TAFMER MP0610", produced by Mitsui Chemicals Co., Ltd.)
Maleic anhydride-modified styrene-ethylene/butylene-styrene block copolymer ("Kraton FG1901X", produced by Shell Inc.)
Styrene-isoprene-styrene copolymer ("Kraton D1117", produced by Shell Inc.)

(F) Fibrous reinforcing material: Glass fibers

T-289 (produced by Nippon Electric Glass Co., Ltd., fiber diameter: 13 $\mu$m)
T-249GH (Nippon Electric Glass Co., Ltd., fiber diameter: 10 $\mu$m)

(G) Other additives

Antioxidant ("Irganox 1098", hindered phenol, produced by Ciba-Geigy AG)

(Preparation method of a test piece)

Necessary amounts of the raw materials were mixed in a blender and then charged in a first supply port of a twin-screw extruder ("TEM-35B" manufactured by Toshiba Machine Co., Ltd.) having an internal diameter of 35 mm, followed by kneading under molten state. Glass fibers, a portion of the polyamide resin component, and a portion or the whole portion of brominated polystyrene or flame retarding assistant are charged successively or simultaneously from a second supply port, as needed. The resulting mixture was kneaded to disperse uniformly, pelletized and dried.
The resulting pellets were fed to an injection molding machine ("IS-80", manufactured by Toshiba Machine Co., Ltd.), whereby a test piece was prepared. It was provided for the test of physical properties.

(Measuring method of physical properties)

1) Amino terminal concentration (mmol/kg): An amino terminal concentration was determined by weighing 0.5 g of the dried sample precisely, dissolving the sample in 20 ml of m-cresol under heating and subjecting to titration with a m-cresol/methanol mixed solution (volume ratio of m-cresol/methanol: 7/3) of 1/10 N p-toluenesulfonic acid.
2) Tensile strength (MPa): measured in accordance with ASTM-D638.
3) Tensile elongation (%): measured in accordance with ASTM-D638.
4) Flexural strength (MPa): measured in accordance with ASTM-D790.
5) Flexural modulus (GPa): measured in accordance with ASTM-D790.
6) Izod impact strength (J/m): measured in accordance with ASTM-D256.
7) Flame retardancy: measured in accordance with UL-94 standards.
     First, a test piece was supported vertically and the lower end of it was brought into contact with the flame of a burner for 10 seconds. After the test piece was detached from the flame, the time spent for extinguishing the fire of the test piece was measured. As soon as the fire was out, the second contact with a flame for 10 seconds was started and the time spent for extinguishing the fire was measured similarly. In addition, whether the cotton under the test piece was ignited by a burning and dropping portion of the test piece was evaluated.

The ranking was made based on the first and second combustion times and presence or absence of ignition of the cotton. The flame retardancy is the highest when evaluated as V-0, which lowers to V-1, V-2 and HB in this order.

8) Fluidity (mm): measured in accordance with the method using bar flow.

That is, the length of flow was measured by using a spiral mold of 20 mm wide and 2 mm thick and carrying out injection molding at a resin temperature of 270°C or 290°C, a mold temperature of 90°C and injection pressure at 100 MPa.

9) Gas emitted (%): A weight loss caused by maintaining the sample at 290°C or 300°C for 50 minutes was measured by a TGA analyzer ("TGA-7", manufactured by Perkin Elmer Corporation).

Examples 1-6, Comparative Examples 1-3

The compositions and evaluation results are shown in Table-1. In the Examples described below, nylon 6 having an amino terminal not blocked was used and main raw materials were charged from a first supply port collectively.

From Examples 1 to 4 and Comparative Example 1, it is recognized that the improvement of the fluidity, which is one of the objects of the present invention, was attained as the amount of nylon 6 was increased.

From Examples 2 and 6 and Comparative Example 2, it is recognized that when brominated polystyrene was used as a flame retardant, the resulting composition exhibited low gas-emitting property, which is one of the objects of the present invention.

From Example 2 and Comparative Example 3, it is recognized that the addition of antimony trioxide as a flame retarding assistant made it possible to impart a high-level of flame retardancy UL94 V-O, which is one of the objects of the present invention.

From Examples 1 to 4, it is recognized that the low gas-emitting property, which is one of the objects of the present invention, tends to lower with an increase in the amount of nylon 6. The way to overcome this problem will be described in the examples described below.

Table 1

| | | Examples | | | | | | Comparative Examples | | |
|---|---|---|---|---|---|---|---|---|---|---|
| | | 1 | 2 | 3 | 4 | 5 | 6 | 1 | 2 | 3 |
| Polyamide resin (parts by weight) | | 70 | 70 | 70 | 70 | 70 | 67 | 70 | 65. | 76 |
| Nylon 66 (parts by weight) | 101 | (80) | (60) | (40) | (20) | | (60) | (100) | (60) | (60) |
| | FE3218 | | | | | (60) | | | | |
| Nylon 6 (parts by weight) | A1025 | (20) | (40) | (60) | (40) | (40) | (40) | | (40) | (40) |
| Brominated polystyrene (parts by weight) | Pyrocheck 68PB | 24 | 24 | 24 | 24 | 24 | | 24 | | 24 |
| | PDBS | | | | | | 27 | | | |
| Brominated phenoxy resin (parts by weight) | F2400 | | | | | | | | 27 | |
| Antimony trioxide (parts by weight) | PATOX-M | 6 | 6 | 6 | 6 | 6 | 6 | 6 | 6 | |
| Tensile strength | MPa | 74 | 73 | 72 | 71 | 71 | 70 | 75 | 74 | 72 |
| Tensile elongation | % | 4 | 4 | 4 | 4 | 4 | 4 | 4 | 4 | 4 |
| Flexural strength | MPa | 123 | 120 | 115 | 112 | 116 | 117 | 127 | 125 | 121 |
| Flexural modulus | GPa | 3.5 | 3.5 | 3.4 | 3.4 | 3.5 | 3.4 | 3.6 | 3.2 | 3.3 |
| Izod impact strength | J/m | 32 | 33 | 34 | 35 | 33 | 31 | 31 | 32 | 33 |
| Distortion temperature under load (°C) | 0.45 MPa | 250 | 242 | 224 | 202 | 242 | 242 | 254 | 241 | 240 |
| Flame retardancy | | V-0 | V-0 | V-0 | V-0 | V-0 | V-0 | V-0 | V-0 | V-2 |
| Fluidity (mm) | 270°C -100 MPa | 422 | 470 | 518 | 578 | 489 | 524 | 376 | 315 | 512 |
| Gas emitted (%) | 290°C - 50 min | 1.3 | 1.4 | 1.6 | 1.9 | 1.5 | 1.5 | 1.3 | 8.5 | 1.7 |

Examples 7 to 13

The compositions and evaluation results are shown in Table-2. In the Examples described below, as nylon 6, that having a blocked amino terminal was used and main raw materials were added collectively from the first supply port.

From the comparison between Examples 7 to 10 and Examples 1 to 4, it is recognized that the use of nylon 6 having an amino terminal blocked with acetic acid brought about an improvement in the low gas-emitting property which is one of the objects of the present invention.

It is recognized that as nylon 6, "A1022S-B" having an amino terminal blocked with benzoic acid and being employed in Example 11, had similar effects to "A1022S" which is nylon 6 of which an amino terminal is blocked with acetic acid and being employed in Examples 7 to 10.

It is recognized that fluidity in Example 12 wherein "PDBS" was used as brominated polystyrene was excellent, which was similar to that in Example 6.

It is recognized that fluidity in Example 13 wherein "A1030-C" which is nylon 6 of which an amino terminal is blocked with adipic acid and "PDBS" brominated polystyrene, respectively, was as excellent, which was similar to that in Example 6.

Table 2

| | | Examples | | | | | | |
|---|---|---|---|---|---|---|---|---|
| | | 7 | 8 | 9 | 10 | 11 | 12 | 13 |
| Polyamide resin (parts by weight) | | 70 | 70 | 70 | 70 | 70 | 67 | 70 |
| Nylon 66 (parts by weight) | 101 | (80) | (60) | (40) | (20) | (60) | (60) | (60) |
| Nylon 6 (parts by weight) | A1022S | (20) | (40) | (60) | (80) | | (40) | |
| | A1022S-B | | | | | (40) | | |
| | A1030-C | | | | | | | (40) |
| Brominated polystyrene (parts by weight) | Pyrocheck 68PB | 24 | 24 | 24 | 24 | 24 | | |
| | PDBS | | | | | | 27 | 24 |
| Antimony trioxide (parts by weight) | PATOX-M | 6 | 6 | 6 | 6 | 6 | 6 | 6 |
| Tensile strength | MPa | 73 | 72 | 71 | 70 | 72 | 68 | 71 |
| Tensile elongation | % | 4 | 4 | 4 | 4 | 4 | 4 | 4 |
| Flexural strength | MPa | 121 | 118 | 112 | 114 | 117 | 115 | 121 |
| Flexural modulus | GPa | 3.5 | 3.5 | 3.4 | 3.4 | 3.5 | 3.4 | 3.5 |
| Izod impact strength | J/m | 31 | 31 | 32 | 35 | 33 | 33 | 34 |
| Distortion temperature under load (°C) | 0.45 MPa | 250 | 241 | 224 | 203 | 242 | 242 | 242 |
| Flame retardancy | | V-0 | V-0 | V-0 | V-0 | V-0 | V-0 | V-0 |
| Fluidity (mm) | 270°C -100 MPa | 424 | 473 | 520 | 580 | 491 | 521 | 515 |
| Gas emitted (%) | 290°C - 50 min | 1.0 | 1.2 | 1.3 | 1.5 | 1.3 | 1.4 | 1.3 |

Examples 14 to 20

The compositions and evaluation results are shown in Table-3. In the Examples described below, raw materials composed of the composition ((A)+(B)+(C)) and a lubricant added thereto were added collectively from the first supply port.

From the comparison between Examples 14 to 20 and Example 7, it is recognized that the addition of the lubricant brought about an improvement in the fluidity which is one of the objects of the present invention. The addition of the lubricant, on the other hand, tends to increase the gas emission slightly, but it does not largely impair the low gas-emitting property which is one of the objects of the present invention.

From the comparison between Examples 14 to 16, 19 and 20 and Examples 17 and 18, it is recognized that among the lubricants, ethylene bisstearylamide, which is an aliphatic bisamide, and metal salts of a higher fatty acid such as calcium stearate or zinc stearate or a mixture thereof brought about a more effective improvement in the fluidity.

Table 3

| | | Examples | | | | | | |
|---|---|---|---|---|---|---|---|---|
| | | 14 | 15 | 16 | 17 | 18 | 19 | 20 |
| Polyamide resin (parts by weight) | | 70 | 70 | 70 | 70 | 70 | 70 | 70 |
| Nylon 66 (parts by weight) | 101 | (80) | (80) | (80) | (80) | (80) | (80) | (80) |
| Nylon 6 (parts by weight) | A1022S | (20) | (20) | (20) | (20) | (20) | (20) | (20) |
| Brominated polystyrene (parts by weight) | Pyrocheck 68PB | 24 | 24 | 24 | 24 | 24 | 24 | 24 |
| Antimony trioxide (parts by weight) | PATOX-M | 6 | 6 | 6 | 6 | 6 | 6 | 6 |
| Ethylene bisstearylamide (parts by weight) | | 1 | | | | | 0.5 | 0.5 |
| Calcium stearate (parts by weight) | | | 1 | | | | 0.5 | |
| Zinc stearate (parts by weight) | | | | | 1 | | | 0.5 |
| Montan wax (parts by weight) | Hoechst Wax E | | | | | 1 | | |
| Ethyleneacrylic acid polymer (parts by weight) | AC540A | | | | | | 1 | |
| Tensile strength | MPa | 73 | 71 | 76 | 71 | 72 | 74 | 77 |
| Tensile elongation | % | 4 | 4 | 4 | 4 | 5 | 4 | 4 |
| Flexural strength | MPa | 120 | 121 | 125 | 118 | 119 | 121 | 124 |
| Flexural modulus | GPa | 3.5 | 3.5 | 3.5 | 3.4 | 3.6 | 3.5 | 3.5 |
| Izod impact strength | J/m | 32 | 31 | 34 | 31 | 33 | 33 | 35 |
| Distortion temperature under load (°C) | 0.45 MPa | 250 | 250 | 249 | 248 | 249 | 250 | 251 |
| Flame retardancy | | V-0 | V-0 | V-0 | V-0 | V-0 | V-0 | V-0 |
| Fluidity (mm) | 270°C -100 MPa | 524 | 515 | 520 | 489 | 495 | 531 | 534 |
| Gas emitted (%) | 290°C - 50 min | 1.2 | 1.1 | 1.1 | 1.4 | 1.2 | 1.2 | 1.2 |

Examples 21 to 28

The compositions and evaluation results are shown in Table-4. In the following examples, raw materials composed of the composition ((A)+(B)+(C)) and an elastomer were added collectively from the first supply port.

From the comparison between Examples 21 to 28 and Example 7, improvements in tensile elongation and izod impact strength and increase in the tenacity are recognized. A slight increasing tendency of the gas emission owing to the addition of the elastomer is recognized, but it does not largely impair the low gas-emitting property, which is one of the objects of the present invention.

From the comparison between Example 27 and Example 7, it is recognized that the fluidity, whose improvement is one of the objects of the invention, tends to lower owing to the addition of an acid-modified elastomer. As shown in Examples 21 to 26, however, it is recognized that the improvement of the fluidity was attained by the use of a lubricant in combination.

In Examples 25 and 28, it is recognized that when an elastomer not modified with an acid was employed as the elastomer, decrease in fluidity was low but production stability tended to deteriorate.

Table 4

| | | Examples | | | | | | | |
|---|---|---|---|---|---|---|---|---|---|
| | | 21 | 22 | 23 | 24 | 25 | 26 | 27 | 28 |
| Polyamide resin (parts by weight) | | 67 | 66 | 64 | 63 | 66 | 66 | 67 | 66 |
| Nylon 66 (parts by weight) | 101 | (80) | (80) | (80) | (80) | (80) | (80) | (80) | (80) |
| Nylon 6 (parts by weight) | A1022S | (20) | (20) | (20) | (20) | (20) | (20) | (20) | (20) |
| Brominated polystyrene (parts by weight) | Pyrocheck 68PB | 27 | 28 | 29 | 30 | 28 | 28 | 27 | 28 |
| Antimony trioxide (parts by weight) | PATOX-M | 6 | 6 | 7 | 7 | 6 | 6 | 6 | 6 |
| Elastomer (parts by weight) | TAFMER MPO610 | 3 | 5 | 8 | 8 | | | 3 | |
| | Kraton D1117 | | | | | 5 | | | 5 |
| | Kraton G1901X | | | | | | 5 | | |
| Ethylene bisstearylamide (parts by weight) | | 1 | 1 | 1 | 2 | 1 | 1 | | |
| Calcium stearate (parts by weight) | | | | | 2 | | | | |
| Tensile strength | MPa | 69 | 66 | 61 | 62 | 65 | 63 | 68 | 64 |
| Tensile elongation | % | 5 | 6 | 7 | 7 | 6 | 6 | 5 | 6 |
| Flexural strength | MPa | 115 | 110 | 102 | 101 | 111 | 108 | 116 | 107 |
| Flexural modulus | GPa | 3.2 | 3.0 | 2.8 | 2.8 | 3.1 | 2.9 | 3.0 | 3.1 |
| Izod impact strength | J/m | 36 | 41 | 47 | 45 | 42 | 44 | 37 | 41 |
| Distortion temperature under load (°C) | 0.45 MPa | 248 | 245 | 241 | 238 | 244 | 243 | 246 | 245 |
| Flame retardancy | | V-0 | V-0 | V-0 | V-0 | V-0 | V-0 | V-0 | V-0 |
| Fluidity (mm) | 270°C -100 MPa | 451 | 435 | 404 | 406 | 483 | 442 | 403 | 413 |
| Gas emitted (%) | 290°C - 50 min | 1.3 | 1.4 | 1.5 | 1.7 | 1.3 | 1.3 | 1.2 | 1.3 |

Examples 29 to 37, Comparative Example 4

Compositions and evaluation results are shown in Table-5. The following Examples are examples in which glass fibers were added as a fibrous reinforcing material to the composition ((A)+(B)+(C) or (A)+(B)+(C)+(D)). The composition ((A)+(B)+(C) or (A)+(B)+(C)+(D)) was added from the first supply port, while the glass fibers were added from the second supply port.

In Examples 29 to 33, it is recognized that a marked improvement in the mechanical strength such as tensile strength and flexural modulus was brought about by the addition of glass fibers. In addition, it is recognized that the fluidity and low gas-emitting property, whose improvements are the objects of the present invention, were on a high level. Particularly the level of fluidity was apparently high when compared with that of Comparative Example 4.

In Examples 34 to 36 wherein only a lubricant or a combination of a lubricant and elastomer was used, it is recognized that the fluidity and low gas-emitting property, whose improvements are the objects of the present invention, were on a high level.

As shown in Table-5, as the processing temperature becomes higher, the fluidity tends to be improved. The lower the processing temperature, the gas emission amount tends to decrease.

That is, the good fluidity makes it possible to set the processing temperature at relatively low, thereby reducing the gas emission amount.

Table 5

| | | Examples | | | | | | | | | Comp. Ex. |
|---|---|---|---|---|---|---|---|---|---|---|---|
| | | 29 | 30 | 31 | 32 | 33 | 34 | 35 | 36 | 37 | 4 |
| Polyamide resin (parts by weight) | | 64 | 61 | 55 | 51 | 55 | 55 | 50 | 50 | 66 | 55 |
| Nylon 66 (parts by weight) | 101 | (80) | (80) | (80) | (80) | (80) | (80) | (80) | (80) | (80) | (100) |
| Nylon 6 (parts by weight) | A1022S | (20) | (20) | (20) | (20) | (20) | (20) | (20) | (20) | (20) | |
| Brominated polystyrene (parts by weight) | Pyrocheck 68PB | 29 | 31 | 36 | | 36 | 36 | 41 | 41 | 28 | 36 |
| | PDBS | | | | 40 | | | | | | |
| Antimony trioxide (parts by weight) | PATOX-M | 7 | 8 | 9 | 9 | 9 | 9 | 9 | 9 | 6 | 9 |
| Glass fibers (parts by weight) | T-289 | 20 | 30 | 50 | | | | | | | |
| | T-249GH | | | | 50 | 50 | 50 | 50 | 50 | 50 | 50 |
| Ethylene bisstearylamide (parts by weight) | | | | | | | | 1 | 1 | 1 | |
| Calcium stearate (parts by weight) | | | | | | | | | | 1 | |
| Elastomer | TAFMER MP0610 | | | | | | | 5 | 5 | | |
| Antioxidant | Irganox 1098 | | | | | | | | | 0.4 | |
| Tensile strength | MPa | 121 | 138 | 164 | 161 | 169 | 170 | 150 | 149 | 169 | 165 |
| Tensile elongation | % | 3 | 3 | 3 | 3 | 3 | 3 | 4 | 4 | 3 | 3 |
| Flexural strength | MPa | 177 | 206 | 266 | 256 | 271 | 272 | 267 | 266 | 273 | 268 |
| Flexural modulus | GPa | 6.9 | 8.1 | 11.0 | 10.8 | 11.4 | 11.5 | 11.0 | 11.1 | 11.4 | 11.2 |
| Izod impact strength | J/m | 68 | 84 | 116 | 106 | 121 | 120 | 142 | 144 | 120 | 108 |
| Distortion temperature under load (°C) | 0.45 MPa | 255 | 255 | 255 | 255 | 255 | 255 | 254 | 253 | 255 | 255 |
| Flame retardancy | | V-0 | V-0 | V-0 | V-0 | V-0 | V-0 | V-0 | V-0 | V-0 | V-0 |
| Fluidity (mm) | 270°C -100 MPa | 322 | 270 | 243 | 275 | 245 | 317 | 238 | 242 | 246 | 212 |
| | 290°C -100MPa | 411 | 368 | 344 | 375 | 354 | 407 | 335 | 345 | 355 | 273 |
| Gas emitted (%) | 290°C - 50 min | 0.9 | 0.8 | 0.8 | 0.8 | 0.8 | 0.9 | 1.0 | 1.0 | 0.7 | 0.8 |
| | 300°C - 50 min | 1.5 | 1.4 | 1.3 | 1.3 | 1.3 | 1.3 | 1.4 | 1.4 | 1.2 | 1.3 |

# EP 0 999 235 A1

Examples 38 to 41

The process and evaluation results are shown in Table-6. In the Examples described below, the process was studied using the composition of Example 32. The numerals in the table are amounts in parts by weight added from the second supply port.

From the comparison between Examples 38 to 41 and Example 32, a reduction in the gas emission amount is recognized.

In Examples 38 and 39, a portion of nylon 66 or nylon 6 was charged to the second supply port together with the glass fibers, whereby shear heat generated by the charging of glass fibers was reduced by the fusion heat of the polymer, thereby controlling the deterioration of the resin composition.

In Example 40, a portion of nylon 66 and the whole portion of the flame retarding assistant were charged from the second supply port together with the glass fibers. In Example 41, the whole portion of the flame retardant and glass fibers were charged collectively from the second supply port and the thermal history of the easily decomposable flame retardant is reduced.

Table 6

|  |  | Examples | | | |
|  |  | 38 | 39 | 40 | 41 |
| Partial charge from second supply port |  |  |  |  |  |
| Nylon 66 (parts by weight) | 101 | 10 |  |  |  |
| Nylon 6 (parts by weight) | A1022S |  | 10 | 10 |  |
| Brominated polystyrene (parts by weight) | PDBS |  |  |  | 40 |
| Antimony trioxide | PATOX-M |  |  | 9 |  |
| (parts by weight) |  |  |  |  |  |
| Tensile strength | MPa | 159 | 160 | 162 | 161 |
| Tensile elongation | % | 3 | 3 | 3 | 3 |
| Flexural strength | MPa | 254 | 256 | 255 | 253 |
| Flexural modulus | GPa | 10.6 | 10.9 | 10.9 | 10.8 |
| Izod impact strength | J/m | 105 | 107 | 108 | 106 |
| Distortion temperature under load (°C) | 0.45 MPa | 255 | 255 | 255 | 255 |
| Flame retardancy |  | V-0 | V-0 | V-0 | V-0 |
| Fluidity (mm) | 290°C-100 MPa | 383 | 373 | 370 | 375 |
| Gas emitted (%) | 300°C-50 min | 1.1 | 1.2 | 1.1 | 1.2 |

**Industrial Applicability**

According to the present invention, the addition of nylon 6 which has a relatively low melting point to nylon 66 which has relatively high heat resistance makes it possible to lower the resin temperature during molding and to control the decomposition of the polyamide resin or flame retardant during molding, thereby lowering the amount of gas emitted.

In addition, existence of nylon 66 which has a relatively high melting point enables molding at a high temperature region, which is usually impossible for nylon 6 is used, and brings about excellent fluidity.

Moreover, by the use of, as a flame retardant, brominated polystyrene which has high heat resistance and fluidity and use of a flame retarding assistant in combination, a high level of flame retardancy, excellent fluidity and low gas-emitting property during molding can be achieved.

According to the present invention, it is therefore possible to obtain a flame-retardant polyamide resin composition which has, in addition to the tenacity which the polyamide resin inherently has, a high level of flame retardancy and excellent fluidity and moldability, does not emit a gas during molding and is therefore suited for electronic parts.

**17**

## Claims

**1.** A flame-retardant polyamide resin composition, which comprises 40 to 89 parts by weight of a polyamide resin (A) composed of 5 to 95 wt.% of nylon 66 and 95 to 5 wt.% of nylon 6; 10 to 50 parts by weight of brominated polystyrene (B) and 1 to 20 parts by weight of a flame retarding assistant (C), based on 100 parts by weight of the whole resin composition.

**2.** A flame-retardant polyamide resin composition according to claim 1, wherein the nylon 6 has an amino terminal blocked with a monobasic or dibasic acid.

**3.** A flame-retardant polyamide resin composition according to claim 2, wherein the monobasic acid is acetic acid or benzoic acid.

**4.** A flame-retardant polyamide resin composition according to claim 1, wherein the polyamide resin (A) is composed of 40 to 90 wt.% of nylon 66 and 60 to 10 wt.% of nylon 6.

**5.** A flame-retardant polyamide resin composition according to claim 2, wherein the polyamide resin (A) is composed of 40 to 90 wt.% of nylon 66 and 60 to 10 wt.% of nylon 6.

**6.** A flame-retardant polyamide resin composition according to claim 1, which further comprises a lubricant (D) in an amount of 5 parts by weight or less based on 100 parts by weight of the resin composition ((A)+(B)+(C) ).

**7.** A flame-retardant polyamide resin composition according to claim 2, which further comprises a lubricant (D) in an amount of 5 parts by weight or less based on 100 parts by weight of the resin composition ((A)+(B)+(C) ).

**8.** A flame-retardant polyamide resin composition according to claim 6, wherein the lubricant (D) is selected from the group consisting of aliphatic bisamides and metal salts of a higher fatty acid.

**9.** A flame-retardant polyamide resin composition according to claim 7, wherein the lubricant (D) is selected from the group consisting of aliphatic bisamides and metal salts of a higher fatty acid.

**10.** A flame-retardant polyamide resin composition according to claim 1, which further comprises an elastomer (E) in an amount of 10 parts by weight or less based on 100 parts by weight of the resin component ((A)+(B)+(C) ).

**11.** A flame-retardant polyamide resin composition according to claim 2, which further comprises an elastomer (E) in an amount of 10 parts by weight or less based on 100 parts by weight of the resin component ((A)+(B)+(C) ).

**13.** A flame-retardant polyamide resin composition according to claim 1, which further comprises a fibrous reinforcing material (F) in an amount of 100 parts by weight or less based on 100 parts by weight of the resin composition ((A)+(B)+(C) ).

**14.** A flame-retardant polyamide resin composition according to claim 2, which further comprises a fibrous reinforcing material (F) in an amount of 100 parts by weight or less based on 100 parts by weight of the resin composition ((A)+(B)+(C) ).

**15.** A flame-retardant polyamide resin composition according to claim 1, wherein the flame retarding assistant (C) is at least one selected from antimony trioxide, antimony tetraoxide, antimony pentaoxide, sodium antimonate, tin(IV) oxide, iron(III) oxide, zinc oxide and zinc borate.

**16.** A flame-retardant polyamide resin composition according to claim 2, wherein the flame retarding assistant (C) is at least one selected from antimony trioxide, antimony tetraoxide, antimony pentaoxide, sodium antimonate, tin(IV) oxide, iron(III) oxide, zinc oxide and zinc borate.

## Amended claims under Art. 19.1 PCT

1. A flame-retardant polyamide resin composition, which comprises 40 to 89 parts by weight of a polyamide resin (A) composed of 5 to 95 wt.% of nylon 66 and 95 to 5 wt.% of nylon 6; 10 to 50 parts by weight of brominated polystyrene (B) and 1 to 20 parts by weight of a flame retarding assistant (C), based on 100 parts by weight of the whole resin composition.

2. A flame-retardant polyamide resin composition according to claim 1, wherein the nylon 6 has an amino terminal blocked with a monobasic or dibasic acid.

3. A flame-retardant polyamide resin composition according to claim 2, wherein the monobasic acid is acetic acid or benzoic acid.

4. A flame-retardant polyamide resin composition according to claim 1, wherein the polyamide resin (A) is composed of 40 to 90 wt.% of nylon 66 and 60 to 10 wt.% of nylon 6.

5. A flame-retardant polyamide resin composition according to claim 2, wherein the polyamide resin (A) is composed of 40 to 90 wt.% of nylon 66 and 60 to 10 wt.% of nylon 6.

6. A flame-retardant polyamide resin composition according to claim 1, which further comprises a lubricant (D) in an amount of 5 parts by weight or less based on 100 parts by weight of the resin composition ((A)+(B)+(C) ).

7. A flame-retardant polyamide resin composition according to claim 2, which further comprises a lubricant (D) in an amount of 5 parts by weight or less based on 100 parts by weight of the resin composition ((A)+(B)+(C) ).

8. A flame-retardant polyamide resin composition according to claim 6, wherein the lubricant (D) is selected from the group consisting of aliphatic bisamides and metal salts of a higher fatty acid.

9. A flame-retardant polyamide resin composition according to claim 7, wherein the lubricant (D) is selected from the group consisting of aliphatic bisamides and metal salts of a higher fatty acid.

10. A flame-retardant polyamide resin composition according to claim 1, which further comprises an elastomer (E) in an amount of 10 parts by weight or less based on 100 parts by weight of the resin component ( (A)+(B)+(C) ).

11. A flame-retardant polyamide resin composition according to claim 2, which further comprises an elastomer (E) in an amount of 10 parts by weight or less based on 100 parts by weight of the resin component ( (A)+(B)+(C) ).

12. A flame-retardant polyamide resin composition according to claim 1, which further comprises a fibrous reinforcing material (F) in an amount of 100 parts by weight or less based on 100 parts by weight of the resin composition ( (A)+(B)+(C) ).

13. A flame-retardant polyamide resin composition according to claim 2, which further comprises a fibrous reinforcing material (F) in an amount of 100 parts by weight or less based on 100 parts by weight of the resin composition ( (A)+(B)+(C) ).

14. A flame-retardant polyamide resin composition according to claim 1, wherein the flame retarding assistant (C) is at least one selected from antimony trioxide, antimony tetraoxide, antimony pentaoxide, sodium antimonate, tin(IV) oxide, iron(III) oxide, zinc oxide and zinc borate.

15. A flame-retardant polyamide resin composition according to claim 2, wherein the flame retarding assistant (C) is at least one selected from antimony trioxide, antimony tetraoxide, antimony pentaoxide, sodium antimonate, tin(IV) oxide, iron(III) oxide, zinc oxide and zinc borate.

## INTERNATIONAL SEARCH REPORT

| International application No. |
|---|
| PCT/JP97/04910 |

**A. CLASSIFICATION OF SUBJECT MATTER**

Int.Cl⁶ C08L77/02, 77/06, 25/18

According to International Patent Classification (IPC) or to both national classification and IPC

**B. FIELDS SEARCHED**

Minimum documentation searched (classification system followed by classification symbols)

Int.Cl⁶ C08L77/02, 77/06, 25/18

Documentation searched other than minimum documentation to the extent that such documents are included in the fields searched

Electronic data base consulted during the international search (name of data base and, where practicable, search terms used)
WPI (DIALOG)

**C. DOCUMENTS CONSIDERED TO BE RELEVANT**

| Category* | Citation of document, with indication, where appropriate, of the relevant passages | Relevant to claim No. |
|---|---|---|
| Y | JP, 62-195043, A (Mitsubishi Chemical Industries Ltd.), August 27, 1987 (27. 08. 87), Page 2, lower left column, lines 5 to 11 ; page 3, lower left column, line 19 to lower right column, line 3 (Family: none) | 1-16 |
| Y | JP, 8-081554, A (Toyobo Co., Ltd.), March 26, 1996 (26. 03. 96), Page 3, column 3, lines 38 to 43 (Family: none) | 2-3, 5, 7, 9, 11, 14, 16 |
| Y | JP, 2-124969, A (Asahi Chemical Industry Co., Ltd.), May 14, 1990 (14. 05. 90), Page 1, right column, line 13 to page 2, upper left column, line 6 & EP, 333457, A | 1-16 |

| [x] Further documents are listed in the continuation of Box C. | [ ] See patent family annex. |
|---|---|

| * Special categories of cited documents: | "T" later document published after the international filing date or priority |
|---|---|
| "A" document defining the general state of the art which is not considered to be of particular relevance | date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| March 18, 1998 (18. 03. 98) | March 31, 1998 (31. 03. 98) |

| Name and mailing address of the ISA/ Japanese Patent Office | Authorized officer |
|---|---|
| Facsimile No. | Telephone No. |

Form PCT/ISA/210 (second sheet) (July 1992)

EP 0 999 235 A1

# INTERNATIONAL SEARCH REPORT

International application No.

PCT/JP97/04910

C (Continuation). DOCUMENTS CONSIDERED TO BE RELEVANT

| Category* | Citation of document, with indication, where appropriate, of the relevant passages | Relevant to claim No. |
|---|---|---|
| Y | JP, 63-128073, A (Stamicarbon B.V.),<br>May 31, 1988 (31. 05. 88),<br>Claims ; page 2, upper right column, lines 1 to 11<br>& EP, 270151, A | 1-16 |
| Y | JP, 53-096056, A (BASF AG.),<br>August 22, 1978 (22. 08. 78),<br>Page 2, lower right column, lines 10 to 17<br>& DE, 2703419, B | 1-16 |
| Y | JP, 61-188458, A (Asahi Chemical Industry<br>Co., Ltd.),<br>August 22, 1986 (22. 08. 86),<br>Claims ; page 1, right column, lines 9 to 18<br>(Family: none) | 6-9 |
| Y | JP, 2-055762, A (Teijin Ltd.),<br>February 26, 1990 (26. 02. 90),<br>Claims (Family: none) | 6-9 |

Form PCT/ISA/210 (continuation of second sheet) (July 1992)